# EUROPÄISCHE PATENTSCHRIFT

(11) **EP 0 313 594 B1**
(45) Veröffentlichungstag und Bekanntmachung des Hinweises auf die Patenterteilung: **24.02.1993**
(21) Anmeldenummer: 88903183.7
(22) Anmeldetag: 20.04.1988
(51) Int. Cl.: B23K 26/00, B23K 26/08, B23K 26/06

(54) **VORRICHTUNG UND VERFAHREN ZUM FÜGEN MIT LASERSTRAHLUNG**
JOINING DEVICE AND PROCESS USING LASER RADIATION
DISPOSITIF ET PROCEDE D'ASSEMBLAGE PAR RAYONNEMENT LASER

(30) Priorität: 25.04.1987 DE 3713975
(43) Veröffentlichungstag der Anmeldung: 03.05.1989
(73) Patentinhaber: FRAUNHOFER-GESELLSCHAFT ZUR FÖRDERUNG DER ANGEWANDTEN FORSCHUNG E.V., 80636 München (DE); Fried. Krupp AG Hoesch-Krupp, 44145 Dortmund (DE)
(72) Erfinder: BEYER, Eckhard, D-5100 Aachen (DE); BEHLER, Klaus, D-5100 Aachen (DE); WELSING, Klaus-Otto, D-5750 Menden (DE)
(74) Vertreter: Henfling, Fritz, Dipl.-Ing.
(86) Internationale Anmeldenummer: DE8800239
(87) Internationale Veröffentlichungsnummer: WO8808353

(56) Entgegenhaltungen:
- EP-A- 121 661
- US-A- 4 471 204
- US-A- 4 649 254

## Beschreibung

Die Erfindung betrifft ein Verfahren zum stoffschlüsigen Fügen mit Laserstrahlung, bei der der Laserstrahl senkrecht zu einer Fügelinie gerichtet ist, parallel zur Fügespaltebene verläuft und quer zum Fügespalt als spaltparalleler Streifen ausgebildet oder fokussiert ist, welcher mindestens eine Teillänge der Fügelinie überdeckt.

Aus der US-A-4 471 204 ist ein Verfahren der eingangs genannten Art und auch eine Vorrichtung hierzu bekannt, bei der zwei Kanten derart zusammengeführt werden, daß sie einen sich verengenden Spalt bilden. Der Laserstrahl wird zum Spalt so ausgerichtet. daß er an den einander gegenüberliegenden Kantenflächen in das Spaltinnere reflektiert wird. Hierbei wird der wesentliche Teile der Strahlungsenergie absorbiert. Die Strahlungsenergie gelangt somit nicht genügend tief in den sich verjüngenden Spalt. Es sind Druckrollen erforderlich, die die miteinander zu verbindenden aufgeschmolzenen Flächen zusammendrücken. Infolge des Zusammendrückens tritt auf beiden Seiten des Spalts aufgeschmolzener Werkstoff aus. Als Nachteile dieser Schweißnaht sind beispielsweise deren Ungleichförmigkeit und die Gefahr von Porenbildung zu nennen.

Die US-A-4 649 254 beschreibt ein Verfahren zur Laserschweißung von Metallglas-Bändern, bei dem ein Laserstrahl senkrecht zur Fügelinie gerichtet und zwischen zwei zu einem sich verengenden Spalt zusammengeführten Werkstücken fokussiert ist, mindestens eine Teillänge der Fügelinie überdeckt und als sehr schmales Rechteck, d.h. annähernd als spaltparalleler Streifen, ausgebildet ist. Auch hier wird der wesentliche Teil der Strahlungsenergie in den Oberflächenbereichen des zu verschweißenden Bandes absorbiert und diese angeschmolzen. Diese Verfahrensweise erzwingt nachteiligerweise ebenfalls einen hohen Preßdruck der nachfolgenden Schweißrollen, der wiederum zu einem unkontrollierten Verquetschen des angeschmolzenen Materials innerhalb des Fügebereiches führt.

Die EP-A1-0 121 661 offenbart eine Einrichtung zum zirkularen oder elliptischen Polarisieren eines Laserstrahles. Als "Rohstrahl" dient hier ein linear polarisierter Laserstrahl, dessen Polarisationsebene bekanntermaßen unter ca. 45° zur Vertikalen geneigt sein muß, wenn dieser in eine optische Einrichtung zur Verschiebung der Phasenlage eines Teilstrahles eintritt, um eine zirkulare Polarisierung zu erhalten. Anstelle einer üblichen zusätzlichen Spiegelanordnung zur Neigung der Polarisationsebene von aus modernen Faltspiegelresonatoren i.d.R. linear polarisiert austretender Laserstrahlung wird hier der Resonator als solcher geneigt bzw. mit Drehgelenken zur Neigung eines oder mehrerer Faltspiegel versehen.

Der letztlich so erzeugte zirkular oder elliptisch polarisierte Strahl ist bezüglich seiner Verwendung in der genannten Schrift nicht definiert. Der Fachmann kennt aber die in beliebigen Richtungen annähernd gleiche Absorptionscharakteristik beim Auftreffen solcher Laserstrahlen auf Materialien und weiß, daß für automatische oder kurvenprogrammierbare Schneidprozesse sich solcherart zirkular polarisierte Laserstrahlung eignet, für Schweißprozesse aber die üblichen Nachteile unliebsamer Absorption außerhalb des Fügebereiches bestehen bleiben.

Der Erfindung liegt die Aufgabe zugrunde, ein Verfahren der eingangs genannten Art so zu verbessern, daß die Energieabsorption näher an der Fügestelle erfolgt.

Diese Aufgabe wird dadurch gelöst, daß die Laserstrahlung linear und parallel zur Fügespaltebene polarisiert ist.

Für die Erfindung ist von Bedeutung, daß parallel zur Fügespaltebene linear polarisierte Laserstrahlung verwendet wird, also keine zirkular polarisierte Strahlung. Es wird erreicht, daß die Laserstrahlung von den miteinander zu verbindenden Flächen optimal reflektiert wird, d. h. mit einem Minimum von Energieabsorption. Erst praktisch an der Fügestelle wird die Absorption so groß, daß ein Aufschmelzen des Werkstoffs erreicht wird. Es ist nicht erforderlich, einen wesentlichen Querdruck auszuüben, um eine hinreichend feste Verschweißung der miteinander zu verbindenden Flächen zu erreichen.

Durch die erfindungsgemäße Polarisierung und Einstrahlung wird bei dem Verfahren plasmafrei gefügt, so daß sich eine durch die bei üblichen Fügeverfahren kaum beherrschbaren Plasmavorgänge ungestörte feste Verbindung der zu fügenden Teile ergibt. Das Fügen kann mit höheren Vorschubgeschwindigkeiten erfolgen.

Dieser quer zum Fügespalt als spaltparalleler Streifen ausgebildete oder fokussierte Laserstrahl legt die erste Reflexionsstelle möglichst tief in den Spalt und in die Nähe der Fügestelle. Diese Strahlformung trägt dazu bei, daß der Strahlungseinfall streifend ist, also praktisch tangential zu den Spaltflächen, so daß der Einfallswinkel so groß wie möglich und damit die Reflexion der parallel zur Spaltebene polarisierten Laserstrahlung so groß wie möglich bzw. absorptionsfrei ist. Die Strahlformung erfolgt durch Fokussierung oder durch eine fokussierungsfreie Anpassung des Laserstrahlquerschnitts an die Fügegeometrie, z. B. durch eine Querschnittsverkleinerung. Die Strahlformung oder die Fokussierung des Laserstrahls erfolgt mittels Systemen, die aus aufeinander angepaßten Spiegeln oder Linsen bestehen, insbesondere in Zylinder-, Parabel- oder Paraboloidform.

Vorteilhafterweise werden die Fügeteile im Bereich der Fügestelle vor- und/oder nachgeheizt, wobei die Heizwirkung den Verbindungsbedingungen gemäß gleich oder beidseits der Naht unterschiedlich eingestellt wird. Das Vor- und/oder Nachheizen wird durchgeführt, um eine vollständige, gleichmäßige und spannungsarme Verbindung zu erreichen und zugleich die Schweißgeschwindigkeit zu steigern. Durch das Vor- und/oder Nachheizen können auch die metallurgischen Eigenschaften so beeinflußt werden, daß eine Verbindung der Fügeteile ermöglicht oder zumindest erleichtert wird. Die Erhitzung der Fügeteile ist beispielsweise dann unterschiedlich, wenn die Fügeteile aus unterschiedlichen Werkstoffen bestehen, die voneinander abweichende Wärmeleiteigenschaften haben. Die unterschiedliche Erhitzung der Fügeteile ist dann so einstellbar, daß die Temperatur auf beiden Seiten der Naht gleich oder im erforderlichen Maße angepaßt ist. Das Heizen erfolgt durch gegebenenfalls zirkular polarisierte Laserstrahlung, durch Hochfrequenzstrahlung oder dgl. Das Nachheizen ist auch mit Hilfe des Bearbeitungslaserstrahls möglich, wenn dessen Erstreckung in der Spaltebene größer ist als die Spalthöhe.

Ist der Laserstrahl etwas größer als Spalthöhe, so trifft der überstehende Strahlungsanteil hinter der Fügestelle auf die miteinander zu verbindenden Kantenbereiche der Ober- und Unterseite. Diese werden entsprechend der hier eingestrahlten Energie angeschmolzen und geglättet, so daß sich eine Verbesserung der Schweißverbindung in diesem an sich kritischen Fügestellenbereich ergibt. Zudem ergibt die gewählte Polarisationseinrichtung des Laserstrahles eine optimale Energieeinkopplung an der Ober- und Unterseite der Bandkanten.

Wenn der Laserstrahl etwas größer als die Spalthöhe ist und die optische Achse des Bearbeitungs- bzw. Schweißlaserstrahles die Mittelsenkrechte zur Fügelinie einschließt, wird die Fügestelle auf beiden Seiten des Spalts im vorbeschriebenen Sinn auf einfachste Weise verbessert.

Die Fügestelle ist gleichermaßen vorteilhaft mit einem oder mehreren Laserstrahlen oder anderen Wärmequellen zusätzlich von einer Spaltseite oder von beiden Spaltseiten erhitzbar. Damit läßt sich eine verbesserte Homogenität der Fügestelle in ihren außenliegenden Randbereichen erreichen, aber auch eine Steigerung der Schweißgeschwindigkeit ist möglich. Beim Fügen geschichteter Fügeteile können die Außenschichten von den zusätzlichen Laserstrahlen oder Wärmequellen gefügt werden .

Werden die vor- und/oder nachgeheizten Fügeteile mit Schutzgas bespült, insbesondere wenn die natürliche Atmosphäre die Verbindung der Fügeteile beeinträchtigen würde, vermeidet man beispielsweise vor oder nach dem Verbindungsvorgang erfolgende Oxidation der Fügeteile.

Der Laserstrahl wird vorteilhafterweise gepulst, wobei bei einer von einer Rundfleckform abweichenden Strahlfleckform eine den Intensitätsverlust im Strahlfleck kompensierende Leistungsüberhöhung in den Impulsen erfolgt.

Die Kante eines Fügeteils wird mit einer Kante eines weiteren Fügeteils während eines Teilevorschubs zu einem stumpfen Stoß mit einer vertikalen Bewegungskomponente scherenartig zusammengeführt, wenn die stumpf zu stoßenden Fügeteile nicht in einer Ebene Kante an Kante zusammengeführt werden können, weil sich sonst eine unzulässige Verformung dieser Fügeteile ergibt. Das ist bei allen massiven bzw. großquerschnittigen Fügeteilen der Fall, oder bei solchen mit einer im Verhältnis zu ihrer Dicke großen Breite, also beispielsweise bei Blechen, Bändern oder Tafeln. Der stumpfe Stoß ist dabei einfachheitshalber ein rechtwinkliger bzw. ein sogenannter I-Stoß. Bei einem scherenartigen Zusammenführen der Fügeteile kann es jedoch dazu kommen, daß die die Fügestelle bildenden Flächen der Fügeteile erst kurz vor der Fügelinie in eine Lage kommen, in der eine der Flächen die einfallende Laserstrahlung auf eine gegenüberliegende Fläche reflektieren kann. Das ist insbesondere dann der Fall, wenn die Fügeteile im Vergleich zu ihrer Breite flach sind, also bei den oben genannten Blechen, Bändern oder Tafeln. In einem solchen Fall, der beispielsweise auch beim Schweißen von Spiralrohren gegeben ist, ist es besonders vorteilhaft, daß die die Fügestelle bildenden Flächen der Fügeteile in einem von 90° abweichenden Winkel zu einer Werkstückaußenfläche dieser Fügeteile ausgebildet werden. Erst die Ausbildung der Fügeteile mit schrägem bzw. mit schräg überlappendem stumpfen Stoß - z. B. durch vorheriges Schleifen oder Formfräsen der Kantenflächen - ermöglicht die Reflexion der in den Fügespalt einfallenden Laserstrahlung im gewünschten Maße und erleichtert das Spiralrohrschweißen und das Schweißen von Behältern usw. mit Laserstrahlung im erforderlichen Maße.

Mindestens zwei Fügeteile werden als Schichtwerkstoffe großflächig miteinander verbunden. Mit diesem Verfahren kann also plattiert werden bzw. es können Schichten oder Folien auf einen Trägerwerkstoff aufgebracht werden, insbesondere in Verbindung mit einem wiederholt ablenkbaren punkt- oder strichförmigen Laserstrahl.

Es wird mindestens ein Fügeteil verwendet, das mindestens zwei Schichten unterschiedlicher Werkstoffe aufweist.

Bei einer Verbindung zweier derartiger Fügeteile können Schichten unterschiedlicher Werkstoffe miteinander nur in ihrem Grenzflächenbereich verbunden werden, also ohne Werkstoffvermischung über die gesamte Schichtdicke. Infolgedessen bleiben vorgesehene Beschichtungen unversehrt. Ein Fügeteil oder mehrere Fügeteile können galvanisch oder elektrolytisch beschichtet sein, aber auch gespritzt, lackiert oder kunststoffbeschichtet.

Ist der Laserstrahl kleiner als Spalthöhe, so kann damit erreicht werden, daß nur ein bestimmter Höhenabschnitt der Spalthöhe bestrahlt wird. Es ist damit auf einfache Weise möglich, zwei nebeneinander auf gleicher Höhe liegende Schichten zweier Fügeteile miteinander zu verbinden, ohne mit diesem Strahl darüber und/oder darunter liegende Schichten zu beeinflussen. Diese können dann bedarfsweise mit einem anderen Laserstrahl oder auf andere Weise miteinander verbunden werden.

Eine Vorrichtung zur Durchführung des erfindungsgemäßen Verfahrens beinhaltet neben den üblichen Form-, Führungs- und Zufuhreinrichtungen für die zu fügenden Teile und neben den Einrichtungen zur Übertragung der Laserenergie in den Fügepunkt eine Meßeinrichtung zur laufenden Überwachung der Temperatur der vorgeschobenen Fügeteile an der Fügestelle und/oder in deren Bereich und es ist bedarfsweise ein das Meßergebnis der Meßeinrichtung mit einem Sollwert in Beziehung setzender und dementsprechend ein oder mehrere Betriebsgrößen der Fügevorrichtung beeinflussender Regler vorhanden. Die laufende Überwachung ist insbesondere dann erforderlich, wenn die Fügeteile insbesondere bei band- oder bahnenförmiger Ausbildung kontinuierlich und/oder schrittweise vorgeschoben werden, wobei der Vorschub zweckmäßigerweise so erfolgt, daß die Fügestelle in konstantem Abstand zum Laser bzw. zu der dessen Laserstrahl fokussierenden Optik bleibt. Um das automatisch zu erreichen, wird unter Auswertung des Meßergebnisses der Meßeinrichtung Einfluß auf eine Betriebsgröße der Fügevorrichtung genommen, beispielsweise auf den Vorschub der Fügeteile.

Die Meßeinrichtung kann aber unabhängig davon für eine TemperaturÜberwachung verwendet werden. Die Meßeinrichtung kann auf beliebige Stellen des Bereichs der Fügestelle gerichtet werden, beispielsweise auf die Fügeteile nahe der Stoßkanten vor, neben und/oder hinter der Fügestelle. Vorzugsweise wird die Temperatur an der Bandoberfläche auf einer oder auf beiden Spaltseiten gemessen. Von besonderer Bedeutung ist auch die Überwachung der Temperatur an der Fügestelle selbst, um festzustellen, ob die Temperatur über der Schmelztemperatur liegt. Das Meßergebnis dieser Messung oder einer Messung in der Nähe der Fügestelle kann dazu benutzt werden, den Laser bzw. dessen Strahlung als Betriebsgröße der Fügevorrichtung zu beeinflussen. Die Überwachung erfolgt beispielsweise über die emittierte Wärmestrahlung, also pyrometrisch.

Der Laserstrahl ist punkt- oder strichförmig auf einen Bruchteil der Spalthöhe geformt und zumindest über einen Teil der Spalthöhe wiederholt ablenkbar. Dieses an sich bekannte Verschwenken oder Scannen des Laserstrahls kann besonders vorteilhaft sein, wenn die Energieverteilung in dem auf Spalthöhe eingestellten Laserstrahl zu ungleichmäßig ist, insbesondere wenn die Energiedichte an den Rändern des Strahls zu gering ist, so daß der vorerwähnte Kantenbereich nicht genügend oder ungleichmäßig erhitzt wird. Das Schwenkbewegen eines punktförmig oder elliptisch geformten oder fokussierten Laserstrahl kann dann dazu beitragen, die Energiedichteverteilung über die Spalthöhe und in den sich an den Spalt anschließenden Kantenbereichen der Fügestelle zu vergleichmäßigen. Notwendig ist das Schwenkbewegen des Laserstrahls dann, wenn die Fügestelle sehr lang ist, wenn also die Strahlerzeugung aufgrund großer Breite der Fügeteile Schwierigkeiten macht. Das Scannen über einen Teil der Spalthöhe ist vorteilhaft beim Verschweißen von Schichtwerkstoffen, z. B. dann, wenn nur eine der Schichten der Fügeteile durch diesen Laserstrahl verschweißt werden soll.

Die Fügeteile sind an der Fügestelle und im Bereich ihrer Schweißnaht vorteilhafterweise bezüglich ihrer Fügeflächen im wesentlichen höhen- und/oder seitenversatzfrei geführt. Zweckmäßigerweise wird der Versatz kleiner als 0,1 mm gehalten. Dies ist für eine exakte Ausbildung der Schweißnaht vorteilhaft und erspart beispielsweise eine Nachbearbeitung der Schweißnaht. Es wird auch auftretenden Spannungen entgegengewirkt und somit die Gefahr der Rißbildung vermieden. Eine derartige versatzfreie Führung der Fügeteile beim Schweißen wird vorteilhafterweise durch eine solche Ausbildung der Vorrichtung erreicht, bei der auf beiden Spaltseiten der Fügeteile im Bereich der Spaltnaht jeweils Führungselemente vorhanden sind, die neben der Schweißnaht auf die Fügeteile einwirken. Die Ausgestaltung der Führungselemente ist also auf die Form der Fügegeometrie abgestimmt. In einer weiteren vorteilhaften Ausbildung ist das Führungselement eine Rolle, die eine mindestens schweißnahtbreite Ringnut oder einen höchstens fügeteilstarken Ringbund aufweist. Die Ringnut läßt den Nahtbereich frei, so daß etwa austretende Schmelzmasse die Führung der Fügeteile beim Stumpfnahtschweißen nicht beeinflußt. Die Ringnut kann auch so gearbeitet werden, daß Messungen von prozeßrelevanten Größen ermöglicht wird, insbesondere eine Messung der Temperatur an der Fügestelle, wozu mindestens ein Führungselement neben der Schweißnaht oder über der Schweißnaht Raum freiläßt, so daß eine Prozeßbeobachtung von außen durchführbar ist. Der fügeteilstarke Ringbund bewirkt bei einem Schweißen eines überlappenden Stoßes, daß die Fügeteile im Bereich der Schweißstelle praktisch drucklos aneinanderliegen.

Um Strahlungsverlust zu vermeiden, ist die Vorrichtung so ausgebildet, daß die Laserstrahlung mit im Bereich der Fügestelle liegenden Brennpunkten fokussiert ist. Der Laserstrahl wird also an die Fügegeometrie angepaßt, so daß insbesondere die Anzahl der Reflexionen vor der Fügestelle kleingehalten wird. Außerdem kann damit auch eine übermäßige Ausspiegelung der Strahlung vor der Fügestelle verhindert werden.

Ein Laserstrahl mit streifenförmigem Querschnitt ist in einer weiteren vorteilhaften Ausbildung zur Fügespaltebene verdreht angeordnet, so daß auch bei geringfügigen Fehljustierungen des Strahlführungssystems beide Fügeteile bestrahlt und ihr Reflexionsvermögen ausgenutzt werden kann.

Vorteilhafterweise weist die Vorrichtung Mittel zur Kantenbearbeitung auf, die die Fügeflächen der Fügeteile zumindest bezüglich strahlungsstreuender Rauhigkeiten glätten, z. B. durch Fräsen, Schleifen oder Polieren, damit die polarisierte Laserstrahlung nicht durch Schneidgrate oder kleinere Rauhigkeitsvorsprünge bereits vor der Fügelinie von den Kanten absorbiert oder gestreut wird. Die Rauhigkeit wird vorteilhafterweise auf weniger als 100 µm gesenkt.

Die Erfindung wird anhand von in der Zeichnung dargestellten Ausführungsbeispielen erläutert. Es zeigen:
- Fig. 1: eine perspektivische Darstellung der erfindungsgemäßen Vorrichtung,
- Fig. 2a, b: einen Schnitt durch die Spaltebene und eine schematische Aufsicht einer weiteren erfindungsgemäßen Vorrichtung,
- Fig. 3: eine Vorrichtung, bei der der Laserstrahl die Senkrechte zur Spaltlinie einschließt,
- Fig. 4: eine Vorrichtung mit zusätzlichen Lasern,
- Fig. 5: eine Vorrichtung mit einem bewegten Fokussierspiegel,
- Fig. 6: die Abhängigkeit der Reflexion vom Einfallswinkel,
- Fig. 7: eine perspektivische schematische Darstellung einer Vorrichtung zum Fügen einander überlappender Kanten,
- Fig. 8: eine schematische Darstellung einer Vorrichtung zum Aufbringen eines Auflagewerkstoffs auf einen Trägerwerkstoff,
- Fig. 9: eine perspektivische schematische Darstellung des Fügens zweier Kanten von Dickblechen,
- Fig. 10: eine Seitenansicht einer Vorrichtung zum Fügen beim Spiralrohrschweißen,
- Fig. 11: eine perspektivische Darstellung in Ergänzung der Fig. 10 und
- Fig. 12a bis 12e: schematische Darstellungen von Führungsrollen für Fügeteile.

Es sollen die Kanten 10, 11 miteinander durch Verschweißen verbunden werden. Diese Kanten bilden einen rechtwinkligen stumpfen Stoß. Es ist aber auch möglich, einen stumpfen Stoß mit abgeschrägten Kanten, eine Bördelnaht oder eine Überlappungsnaht zu schweißen. Statt Kanten können auch größere Flächen miteinander verschweißt werden. Es ist möglich, Bleche, Folien, Bauteile usw. zu plattieren. Es ist möglich, eine Vielzahl von Schichten miteinander zu verbinden, um Werkstoffverbundteile in Sandwichbauweise herzustellen. Auch können plattierte Bleche miteinander verschweißt werden, ohne daß im Bereich der Naht die Plattierung mit dem Grundwerkstoff vermischt wird.

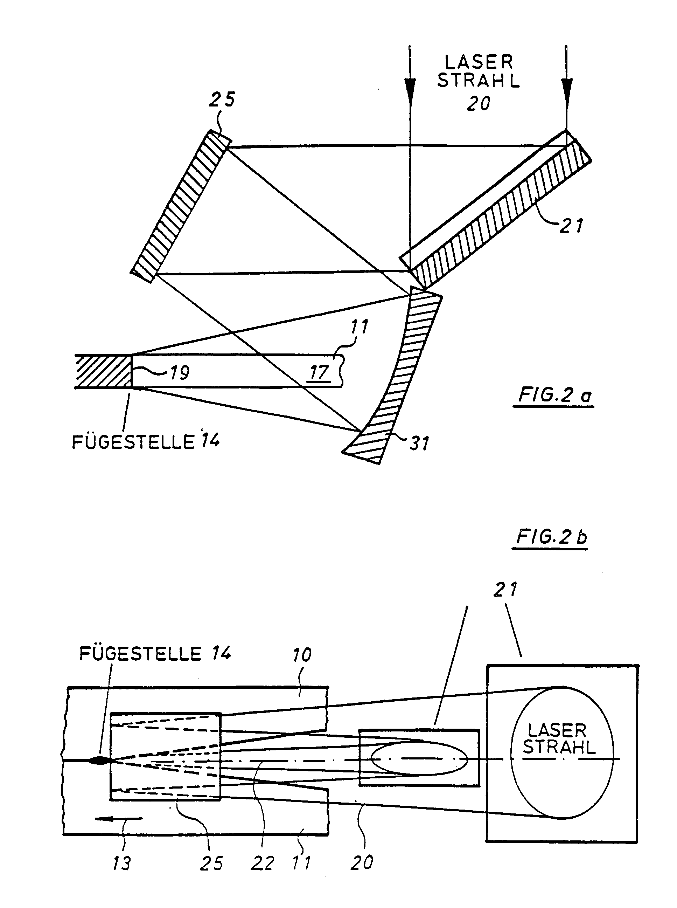

Die Kanten 10, 11 sind beispielsweise Teilbereiche separater Teile wie Bleche, Folien od.dgl., oder sie sind die Kanten eines einzigen, durch Rollverformen zu einem Schlitz- oder Spiralrohr od. dgl. zusammengebogenen Werkstoffstreifens. Beide Kanten 10, 11 schließen einen Spalt 12 zwischen sich ein, wobei z.B. zur Herstellung eine Werkstofförderung in Richtung des Pfeils 13 so erfolgt, daß die Lage des Spalts 12 an derselben Stelle beibehalten wird. Infolgedessen werden die Kanten 10, 11 im Verlauf der Förderung des Werkstoffs bzw. der Teile in der Richtung des Pfeils 13 einander zunehmend angenähert, wie es auch aus Fig. 2b ersichtlich ist, so daß sich eine Fügestelle 14 ergibt, von der aus sich eine Schweißnaht 15 erstreckt, in deren Bereich also die miteinander zu verbindenden Flächen 16, 17 der Kanten 10, 11 durch Aufschmelzen des Werkstoffs dieser Kanten miteinander verweißt sind. Das Zusammenbringen der Flächen 16, 17 erfolgt unter Druckbeaufschlagung der Kanten 10, 11 im Bereich vor der Fügestelle 14. Im Bereich der Fügestelle 14 selbst liegen die Flächen 16, 17 praktisch drucklos aneinander, so daß der aufgeschmolzene Werkstoff praktisch nicht unter Fügedruck steht.

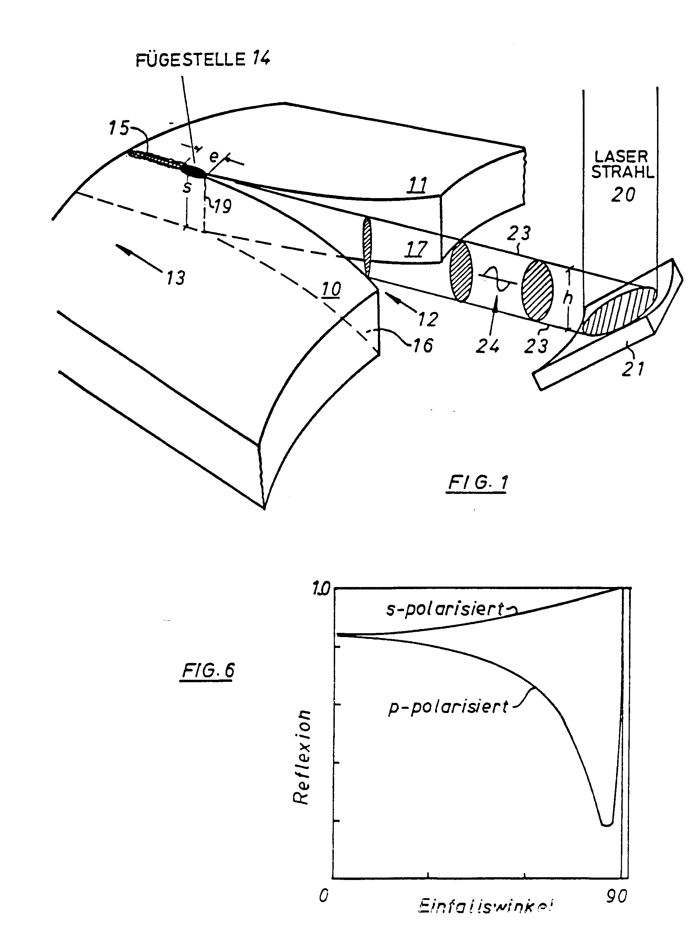

Fig. 1 zeigt im Bereich der Fügestelle 14 die Füge-Linie 19, an der sich die Flächen 16, 17 über die Spalthöhe s zuerst berühren. Außerdem hat die Fügestelle 14 in der Richtung des Pfeils 13 eine Erstreckung e. Durch einen Laserstrahl 20 soll diese Fügestelle 14 in geeigneter weise erhitzt werden.

Die Formung des Strahlquerschnitts und die Fokussierung auf Dimensionen, die dem Fügeprozeß angepaßt sind, erfolgt durch ein System von Zylinder-, Parabel- oder Parabolspiegeln. Die Form und die Krümmungsradien bzw. Brennweiten der Spiegel sind so aufeinander abgestimmt, daß der Laserstrahl 20 in der gewünschten weise geformt und fokussiert wird.

Der Laserstrahl 20 wird beispielsweise mit einem CO₂-Laser erzeugt, und auf einen Fokussierspiegel 21 gelenkt, der den Laserstrahl 20 zur Fügestelle 14 hin umlenkt. Die Anordnung des Fokussierspiegels 21 ist gemäß Fig. 1 und Fig. 2a,b so getroffen, daß der Laserstrahl 20 in der Fügespaltebene 22 verläuft. Außerdem ist der Laserstrahl senkrecht zur Fügelinie 19 auf die Fügestelle 14 gerichtet. Durch beide Maßnahmen wird erreicht, daß der Laserstrahl so tief wie möglich und gleichmäßig in den Spalt 12 gelangt.

Der Laserstrahl 20 muß so fokussiert werden, daß seine Ernergie möglichst vollständig nur im Bereich der Fügestelle 14 zur Verfügung steht. In diesem Sinne zeigt Fig. 1 einen Laserstrahl 20, dessen Höhe h auf die Spalthöhe s abgestimmt ist und der durch den Fokussierspiegel 21 so stark wie möglich quer zum Spalt 12 fokussiert wird. Fig. 1 veranschaulicht die Fokussierung zum spaltparallelen Streifen durch drei in Strahlrichtung schmaler werdende Ellipsendarstellungen mit gleichbleibender Strahlhöhe h. Infolgedessen trifft der Laserstrahl 20 erst tief im Spalt 12 bzw. an der Fügestelle 14 auf die Flächen 16, 17, dort wo die Fügelinie 19 ist. Diese Ausbildung des Laserstrahls 20 als spaltparalleler Streifen, der also quer zum Spalt 12 fokussiert ist, ist eine wesentliche Maßnahme, damit die Erwärmungsstelle an den Kanten 10, 11 mit der Fügestelle 14 zusammenfällt.

Die Spaltebene 22 wird in Fig. 2b durch eine strichpunktierte Linie und in Fig. 1 durch die Strahlbegrenzungslinien 23 veranschaulicht. Die Spaltebene 22 tangiert also die Flächen 16, 17 erst im Bereich der Fügestelle 14.

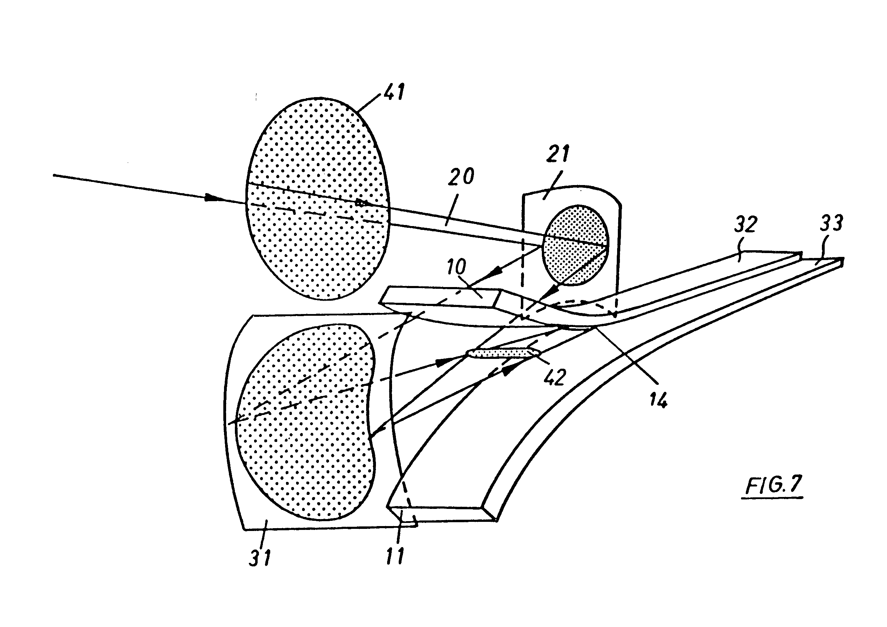

Fur die Erfindung ist es von Bedeutung, daß die Laserstrahlung ausschließlich parallel zur Spaltebene 22 polarisiert ist. Es hat sich erwiesen, daß der Reflexionsgrad von mit CO₂-Lasern erzeugter Laserstrahlung insbesondere an Edelstahl polarisationsabhängig ist. Fig. 6 veranschaulicht den Zusammenhang. Schwingt die Laserstrahlung quer zur Spaltebene bzw. ist sie parallel zur Einfallsebene polarisiert, so ergibt sich bei großen Einfallswinkeln eine verringerte Reflexion. Die Strahlungsabsorption ist also bei streifendem Einfall quer zur Spaltebene schwingender Strahlung vergleichsweise groß und die Strahlungsenergie gelangt nicht bis zur Fügestelle bzw. in deren Nähe. Schwingt die Laserstrahlung hingegen parallel zur Spaltebene 22, wie in Fig. 1 durch die Darstellung 24 angedeutet, so ist die Reflexion bei großem Einfallswinkel sehr hoch, verglichen mit senkrecht zur Spaltebene schwingender Laserstrahlung. Infolgedessen wird die parallel zur Spaltebene schwingende Laserstrahlung wegen der geringen Abhängigkeit ihrer Reflexion vom Einfallswinkel größtenteils bis zur Fugestelle 14 oder in deren unmittelbarer Nähe gelangen, wo dann die Absorption stattfindet.

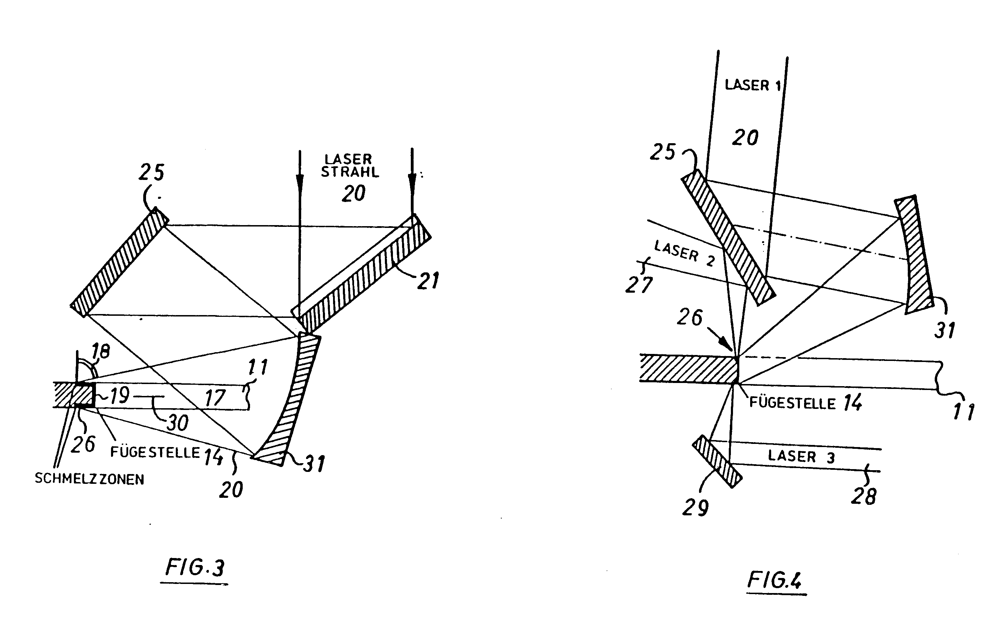

Aus Fig. 6 ist erklärbar, daß es besonders vorteilhaft ist, wenn die Laserstrahlung ausschließlich parallel zur Spaltebene polarisiert und zugleich der Laserstrahl 20 quer zum Spalt 12 als spaltparalleler Streifen gemäß Fig. 1 fokussiert ist. Denn dann ist der zwischen dem Strahl 20 und der senkrecht zu den Flächen 16, 17 gemessene Einfallswinkel 18 (Fig. 3) besonders groß, die Reflexion mithin besonders klein und die Strahlungsenergie wird völlig bis zur Fügestelle 14 gelangen.

In Fig. 1 ist der die Strahlbreite des Laserstrahls 20 bestimmende Fokussierspiegel 21 in der Spaltebene 22 und senkrecht zur Fügelinie 19 angeordnet. Die Strahlhöhe h ist so vorbestimmt, daß sie vom Fokussierspiegel 21 ab der Spalthöhe s gleich ist. In den Fig. 2a,b sind in den Strahlengang des Fokussierspiegels 21 ein Umlenkspiegel 25 und ein weiterer Fokussierspiegel 31 geschaltet. Der Umlenkspiegel 25 lenkt den Laserstrahl 20 auf den Fokussierspiegel 31, der den Laserstrahl 20 derart fokussiert, daß seine Strahlhöhe erst an der Fügestelle 14 gleich der Spalthöhe s ist.

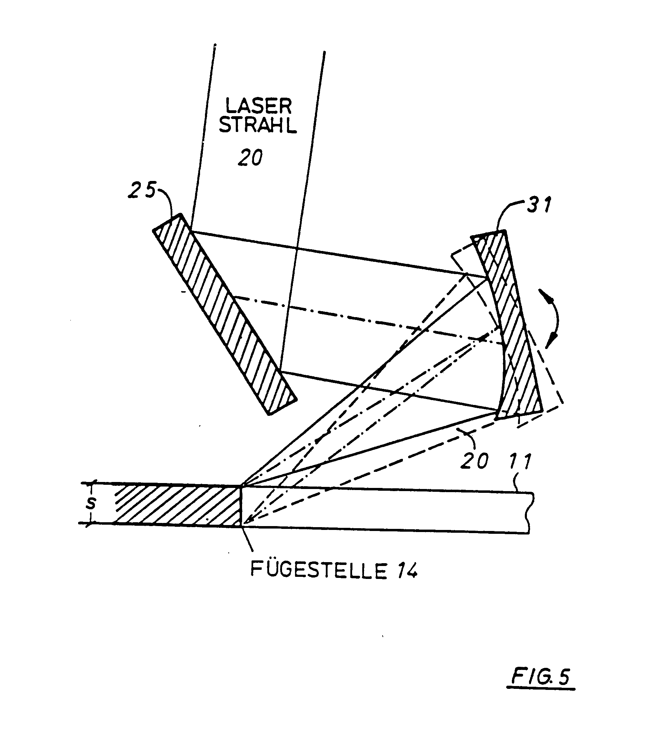

Fig. 3 zeigt eine der Fig. 2 weitgehend entsprechende Vorrichtung, bei der die Höhe das Laserstrahls 20 jedoch so bemessen wird, daß diese an der Fügelinie 19 etwas größer als die Spalthöhe s ist. Der Teil des Laserstrahls 20, der die Fugelinie 19 passiert, trifft je nach Fokussierung unter einem spitzen Winkel auf die Kantenbereiche 26, die entsprechend aufgeschmolzen werden. Da die Flächen dieser Kantenbereiche 26 senkrecht zur Spaltebene angeordnet sind, wird die Energie des Laserstrahls insbesondere bei parallel zur Spaltebene polarisierter Strahlung in hohem Maße absorbiert, weil der Einfallswinkel zwischen der Strahlung und der Senkrechten dieser Kantenbereiche 26 groß ist. Die vom Laserstrahl 20 gebildeten Schmelzzonen sind in Fig. 3 stark ausgezogen dargestellt. Dasselbe gilt für die Darstellung in Fig. 4, wonach der Laserstrahl 20 vom Fokussierspiegel 31 so gebündelt wird, daß er im Bereich der Fügestelle 14 deren Höhe hat. Zusätzlich werden Laserstrahlen 27, 28 mittels der Umlenkspiegel 25, 29 auf die Kantenbereiche 26 reflektiert. Anstelle der Laserstrahlen 27 oder 28 eines weiteren, leistungsschwächeren Lasers kann auch in nicht dargestellter Weise ein Teil der Strahlungsenergie des den Strahl 20 erzeugenden Lasers ausgeblendet und in der in Fig. 4 dargestellten weise verwendet werden.

Anstelle der Laserstrahlen 27, 28 können auch andere Wärmequellen verwendet werden, beispielsweise Hochfrequenzwärmequellen.

Fig. 4 zeigt die Anordnung des Fokussierspiegels 31 oberhalb der Kanten 10, 11, was aus räumlichen Gründen vorteilhaft sein kann. Diese Anordnung erfordert jedoch die Anwendung zumindest eines weiteren Laserstrahls, falls beide, oberhalb und unterhalb der Kanten 10, 11 gelegenen Kantenbereiche 26 erhitzt werden sollen. Wird hingegen die Mittelsenkrechte 30 zur Fügelinie 19 vom Laserstrahl 20 mit ein geschlossen, vgl. Fig. 3, so kann ein einziger Laserstrahl 20 genügen.

Fig. 5 zeigt eine Vorrichtung mit bewegtem Fokussierspiegel 31. Der diesem Spiegel 31 zugeführte Laserstrahl 20 ist senkrecht zur Darstellungsebene bereits fokussiert, so daß die weitere Fokussierung durch den Spiegel 31 im Bereich der Fügestelle 14 einen Laserstrahl mit punktförmigem Querschnitt ergibt, der über die Höhe s der Fügestelle 14 hin- und herbewegt werden kann. Damit erfolgt eine gleichmäßige Energieverteilung über die Höhe s der Fügestelle 14.

Gemäß Fig. 7 werden die Kanten 10, 11 zweier Fügeteile 32, 33 überlappend angeordnet, indem sie durch nicht dargestellte Führungselemente in der dargestellten Weise einander tangential zugeführt werden. Die Fügelinie bzw. die Fügestelle 14 ist in Fig. 7 infolgedessen horizontal angeordnet. Der Laserstrahl 20, dessen Ursprungsquerschnitt mit 41 bezeichnet ist, wird durch den Fokussierspiegel 21 auf die Spalthöhe s fokussiert und auf den Fokussierspiegel 31 projiziert, der den Laserstrahl zu einem spaltparallelen Streifen fokussiert, wie durch die Strahlquerschnittsdarstellung 42 angedeutet wird.

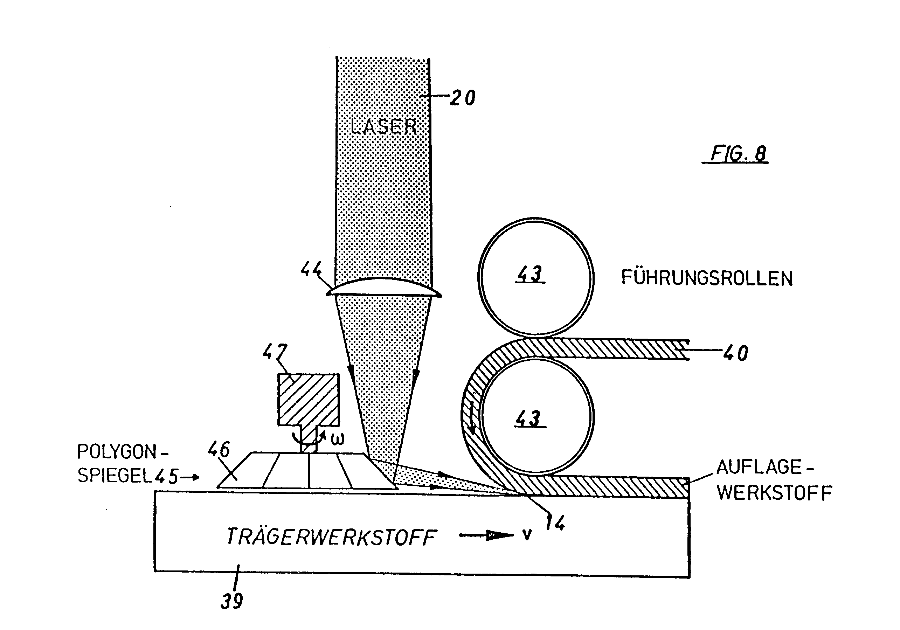

Fig. 8 zeigt zwei Fügeteile 39, 40, wobei das Fügeteil 39 ein mit der Geschwindigkeit v transportierter Trägerwerkstoff ist, beispielsweise ein Blech, und wobei das Fügeteil 40 ein Auflagewerkstoff ist, beispielsweise eine verschweißbare Folie. Das Fügeteil 40, also die Folie, wird über Führungsrollen 43 in Pfeilrichtung zugeführt und umgelenkt, so daß es an der Fügestelle 14 dem Fügeteil 39 tangential zuläuft.

Der Verbindung der beiden Fügeteile 39, 40 dient ein Laserstrahl 20, der mit einer Fokussieroptik 44 auf die Fügestelle 14 fokussiert wird. Die Umlenkung des Laserstrahls 20 erfolgt mit einem Polygonspiegel 45, der aus mehreren Spiegelsegmenten 46 besteht, die unter 45° gegen die Senkrechte geneigt auf dem Außenumfang eines Trägerrades mit zueinander gleichmäßigen Winkeln angeordnet sind und von einem Antrieb 47 mit einer festzulegenen Winkelgeschwindigkeit ω gedreht werden. Infolgedessen wird der Laserstrahl 20 stets senkrecht zur Darstellungsebene von vorne nach hinten geschwenkt, so daß der auf einen Bruchteil der Spalthöhe s fokussierte Strahlfleck die Fügestelle 14 bzw. deren Fügelinie entsprechend der Winkelgeschwindigkeit ω mehrfach überstreicht und dabei die dem verschweißen dienende Schweißenergie zuführt. Sofern die Bandbreite der Fügeteile 39, 40 nicht zu groß ist, kann anstelle des Polygonspiegels 45 ein feststehender planer Umlenkspiegel verwendet werden.

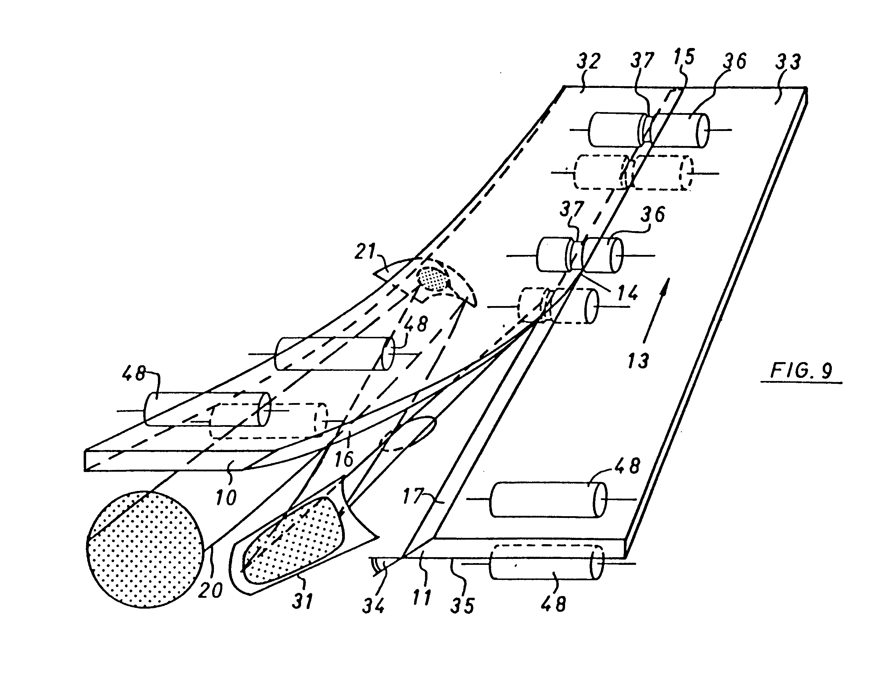

Fig. 9 zeigt zwei aus Dickblech bestehende Fügeteile 32, 33, die zu einem stumpfen Stoß zusammengeführt und miteinander verbunden werden sollen. Es ist ersichtlich, daß diese Bleche wegen ihrer im Vergleich zu ihrer Dicke großen Breite nicht in ihrer Hauptebene gemäß Fig. 1 einander angenähert werden können, da ihre Verformung in dieser Ebene unannehmbar groß wäre. Sie werden infolgedessen wie dargestellt scherenartig einander zugeführt, und zwar mit Führungsrollen 48, die jeweils oberhalb und unterhalb eines Fügeteils 32, 33 vorhanden sind. Von Bedeutung für das Fügen derartiger bandförmiger Werkstoffe ist die Verwendung abgeschrägter Fügeflächen 16, 17. Die Flächen 16, 17 haben also einen von 90° abweichenden Winkel 34 zu einer Werkstückaußenfläche 35. Dementsprechend schräg ist die Fügestelle 14 angeordnet und der Laserstrahl 20 muß über die Fokussierspiegel 21, 31 entsprechend geneigt zwischen die Flächen 16, 17 eingebracht werden.

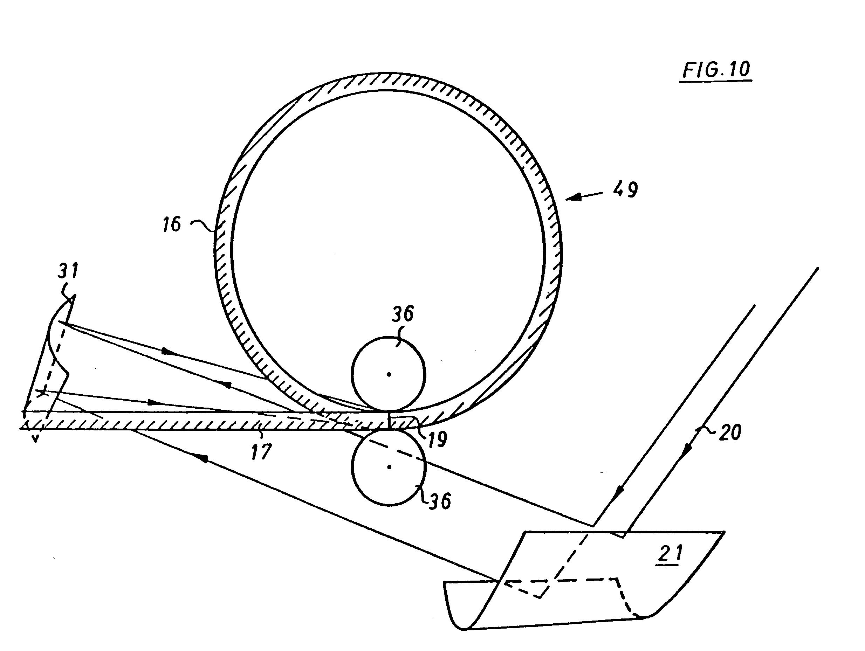

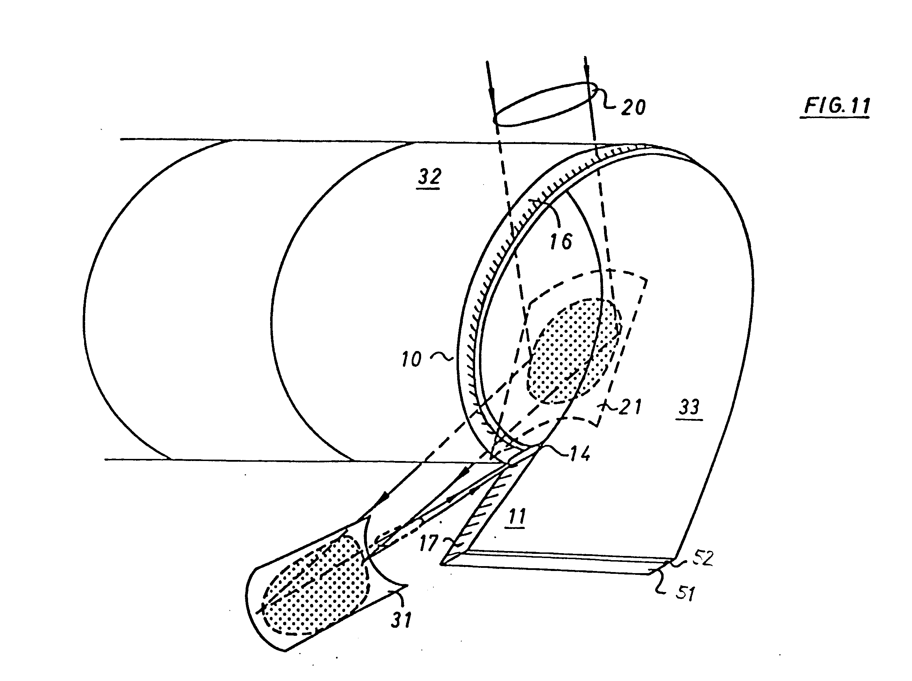

Die Fig. 10, 11 erläutern das Schweißen von Spiralrohren 49. Es wird in bekannter Weise ein bandförmiger Werkstoff so spiralförmig gewickelt, daß an der Fügestelle 14 die Kanten 10, 11 der von dem bandförmigen Werkstoff gebildeten Fügeteile 32, 33 scherenartig zu einem stumpfen Stoß zusammengebracht werden. Insbesondere Fig. 10 zeigt, daß die Flächen 16, 17 der Kanten 10, 11 erst unmittelbar vor der Fügelinie 19 einander überdecken, so daß es zum Hineinstrahlen auf die Fügelinie 19 mittels Reflexion notwendig ist, die aus Fig. 11 ersichtliche Abschrägung bzw. Schräganordnung der Flächen 16, 17 vorzunehmen, damit diese bereits hinreichend weit vor der Fügelinie 19 einfallende Laserstrahlung reflektieren können. Der Laserstrahl 20 ist durch die Fokussierspiegel 21, 31 ähnlich der Darstellung in Fig. 9 quer zum Fügespalt als spaltparalleler Streifen fokussiert und insbesondere parallel zur Fügespaltebene polarisiert.

Die Fig. 9 bis 11 zeigen eine höhenversatzfreie Führung der Fügeflächen 16, 17 an der Fügestelle 14 durch Führungselemente 36. Die Führungselemente 36 sind Rollen bzw. Doppelrollen, die zwischen sich im Bereich der Schweißnaht 15 eine Ringnut 37 einschließen, welche die Schweißnaht 15 frei läßt, können aber auch Gleitschuhe sein. In der Fig. 11 sind die Führungselemente bzw. Rollen nicht dargestellt. Etwa austretende Schmelze beeinflußt infolgedessen nicht die Führung der Fügeteile 32, 33. Die Führung der Fügeteile 32, 33 erfolgt jedoch nicht nur im Bereich der Fügestelle 14, sondern gemäß Fig. 9 auch dahinter, so daß die Schweißnaht 15 geführt erkaltet und Spannungen durch gewichtsabhängigen Verzug des bandförmigen Werkstoffs vermieden werden. Die Führung der Fügeteile 32, 33 erfolgt vorteilhafterweise ohne Anpressen im Bereich der Fügestelle 14.

Fig. 11 zeigt noch in Ergänzung der Fig. 10, daß der bandförmige Werkstoff bzw. die Fügeteile 32, 33 aus zwei Schichten 51, 52 bestehen, von denen die Schicht 52 ein Trägerwerkstoff und die Schicht 51 beispielsweise ein Antikorrosionsbelag ist. Mit Hilfe des Laserstrahls 20 werden die Flächen 16, 17 dicht miteinander verschweißt, so daß die Schicht 48 im Rohrinneren einen dichten Belag bildet.

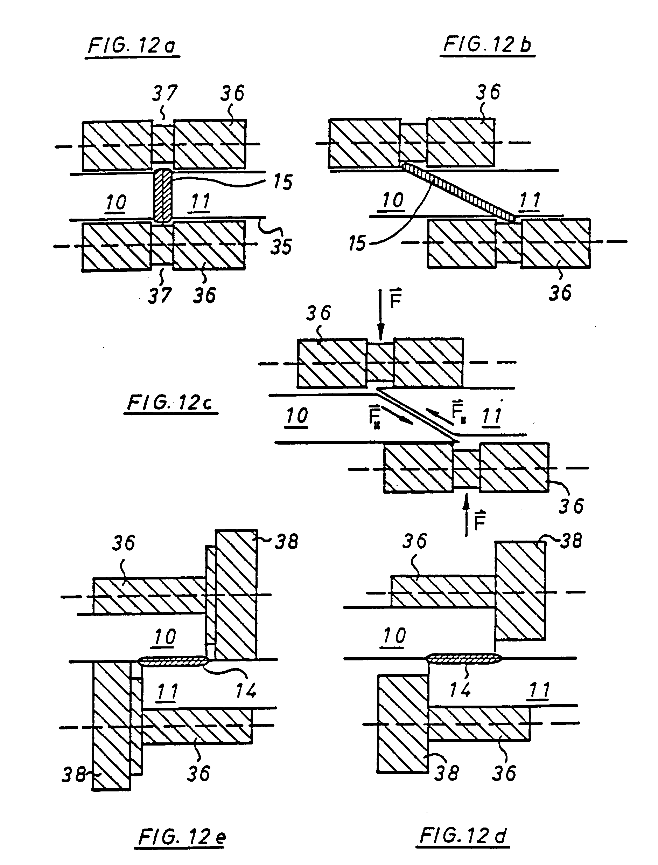

Die Fig. 12 a bis 12 e zeigen Führungsmöglichkeiten für die Fügeteile bzw. deren Kanten 10, 11 im Querschnitt. Fig. 12 a zeigt eine vertikal zu einer Werkstückaußenfläche 35 angeordnete Stumpfnaht mit zwei rollenförmigen Führungselementen 36, die jeweils eine Ringnut 37 im Bereich der Schweißnaht 15 aufweisen. Fig. 12 b zeigt eine ähnliche Anordnung mit zueinander versetzten Fügerollen für eine Schrägstumpfnaht 15 und Fig. 12 c erläutert den Fügevorgang unter Verwendung von Rollen als Führungselemente 36. Die Fig 12 d, e betreffen einander überlappende Kanten 10, 11 mit entsprechend horizontaler Fügestelle 14. Die Kanten 10, 11 sind durch die Fügeelemente 36 mit je einem Ringbund 38 gegen seitliche Versetzung gesichert. Der Ringbund 38 gemäß Fig. 12 e ist ebenso hoch, wie das Fügeteil bzw. die Kante 10 oder 11 dick ist, so daß die Kanten 10, 11 im Bereich der Fügestelle 14 nicht gegeneinander gedrückt werden können, sondern im gewünschten Sinne drucklos aneinander geführt werden.

Die Ringnut 37 der Führungselemente 36 ist so tief bzw. breit, und in Fig. 12 d ist der Abstand des Ringbundes 38 von der Kante 11 so groß, daß eine Prozeßbeobachtung der Fügestelle 14 zur Überwachung der Schweiß- bzw. Fügetemperatur möglich ist.

## Patentansprüche

1. Verfahren zum stoffschlüssigen Fügen mit Laserstrahlung, bei der der Laserstrahl (20) senkrecht zu einer Fügelinie (19) gerichtet ist, parallel zur Fügespaltebene (22) verläuft und quer zum Fügespalt (12) als spaltparalleler Streifen ausgebildet oder fokussiert ist, welcher mindestens eine Teillänge der Fingelinie (19) überdeckt, dadurch gekennzeichnet, daß linear und parallel zur Fügespaltebene (22) zweier Fügeteile (32, 33) polarisierte Laserstrahlung verwendet wird.

2. Verfahren nach Anspruch 1, dadurch gekennzeichnet, daß die Fügeteile (32, 33) im Bereich der Fügestelle (14) vor- und/oder nachgeheizt werden, wobei die Heizwirkung den Verbindungsbedingungen gemäß beidseits der Naht (15) gleich oder unterschiedlich eingestellt wird.

3. Verfahren nach Anspruch 2, dadurch gekennzeichnet, daß die Einstellung gleicher Heizwirkung beidseits der Naht (15) dadurch erfolgt, daß die optische Achse des Laserstrahls (20) die Mittelsenkrechte (30) zur Fügelinie (19) einschließt und der Laserstrahl (20) an der Fügestelle (14) größer als die Spalthöhe (S) ist.

4. Verfahren nach Anspruch 2 oder 3, dadurch gekennzeichnet, daß die vor- und/oder nachgeheizten Fügeteile (32, 33) mit Schutzgas bespült werden.

5. Verfahren nach einem der Ansprüche 1 bis 4, dadurch gekennzeichnet, daß der Laserstrahl (20) mit einer den durch von einer Rundfleckform abweichende Strahlfleckform entstehenden Intensitätsverlust kompensierenden Leistungsüberhöhung gepulst wird.

6. Verfahren nach einem der Ansprüche 1 bis 5, dadurch gekennzeichnet, daß die Kante (10) eines Fügeteils (32) mit einer Kante (11) eines weiteren Fügeteils (33) während eines Teilevorschubs zu einem stumpfen Stoß mit einer vertikalen Bewegungskomponente scherenartig zusammengeführt werden.

7. Verfahren nach Anspruch 6, dadurch gekennzeichnet, daß die die Fügestelle (14) bildenden Flächen (16, 17) der Fügeteile (32, 33) in einem von 90° abweichenden Winkel (34) zu einer Werkstückaußenfläche (35) dieser Fügeteile (32, 33) ausgebildet werden.

8. Verfahren nach einem der Ansprüche 1 bis 7, dadurch gekennzeichnet, daß der Laserstrahl zur großflächigen Verbindung mindestens zweier Fügeteile (39, 40) als Schichtwerkstoff wiederholt abgelenkt wird und an der Fügestelle (14) kleiner als die Spalthöhe (S) ist.

9. Verfahren nach Anspruch 8, dadurch gekennzeichnet, daß mindestens eine Fügeteil (32) verwendet wird, das mindestens zwei Schichten (39, 40) unterschiedlicher Werkstoffe aufweist.

10. Verfahren nach einem der Ansprüche 1 bis 9, dadurch gekennzeichnet, daß nur eine oder eine begrenzte Anzahl der Schichten (39 oder 40) des geschichteten Fügeteiles (32) mit dem anderen Fügeteil verbunden wird.

11. Vorrichtung zum stoffschlüssigen Fügen mit Laserstrahlung nach den Ansprüchen 1 bis 10, welche einen Laser-Generator, eine Laser-Strahlführungsoptik, eine Einrichtung zur Formung und Fokussierung eines Laserstrahls (20) zwischen zwei zu einem sich verengenden Spalt (12) zusammengeführten Werkstücken, eine Einrichtung zur linearen Polarisierung und eine Einrichtung zur Beeinflussung der Polarisationsrichtung eines Laserstrahls aufweist, dadurch gekennzeichnet, daß eine Meßeinrichtung zur laufenden überwachung der Temperatur der Fügeteile (32, 33) an der Fügestelle (14) oder in deren Bereich vorhanden ist.

12. Vorrichtung nach Anspruch 11, dadurch gekennzeichnet, daß ein das Meßergebnis der Meßeinrichtung mit einem Sollwert in Beziehung setzender und dementsprechend ein oder mehrere Betriebsgrößen der Fügevorrichtung beeinflussender Regler vorhanden ist.

13. Vorrichtung nach Anspruch 11 oder Anspruch 12, dadurch gekennzeichnet, daß auf beiden Spaltseiten der Fugeteile (32, 33) im Bereich der Schweißnaht (15) jeweils Führungselemente (36) vorhanden sind, die neben der Schweißnaht (15) auf die Fügeteile (32, 33) so einwirken, daß die Fugeflächen (16, 17) höhen- und/oder seitenversatzfrei geführt werden.

14. Vorrichtung nach Anspruch 13, dadurch gekennzeichnet, daß das Führungselement (36) eine Rolle ist, die eine mindestens schweißnahtbreite Ringnut (37) und/oder einen höchstens fügeteilstarken Ringbund (38) aufweist.

15. Vorrichtung nach einem der Ansprüche 11 bis 14, dadurch gekennzeichnet, daß die Laserstrahlung mit im Bereich der Fügestelle (14) liegenden Brennpunkten fokussiert ist.

16. Vorrichtung nach einem der Ansprüche 11 bis 15, dadurch gekennzeichnet, daß ein Laserstrahl mit streifenförmigem Querschnitt zur Fügespaltebene (22) verdreht angeordnet ist.

17. Vorrichtung nach einem der Ansprüche 11 bis 16, dadurch gekennzeichnet, daß Mittel zur Kantenbearbeitung vorhanden sind, die die Fügeflächen (16, 17) der Fügeteile (32, 33) bezüglich strahlungsstreuender Rauhigkeiten glätten.

## Claims

1. Process for using laser radiation and the material themselves to form a join, wherein the laser beam (20) is directed perpendicular to a join line (19), runs parallel to the plane (22) of the join gap, and transverse to the join gap (12) is formed as a strip parallel to the gap or focussed, which covers at least a partial length of the join line (19), characterised in that polarised laser radiation is used linear and parallel to the plane (22) of the join gap of two parts to be joined (32, 33).

2. Process according to claim 1, characterized in that the join parts (32, 33) are pre-heated and/or subsequently heated in the region of the join spot (14), wherein the heating effect is set the same or different according to the joining conditions on both sides of the seam (15).

3. Process according to claim 2, characterized in that the heating effect on both sides of the seam (15) is set the same, by the fact that the optical axis of the laser beam (20) includes the middle perpendicular (30) to the join line (19) and the laser beam (20) is at the join spot (14) larger than the gap height (s).

4. Process according to claim 2 or 3, characterized in that the parts to be joined (32, 33) which have been preheated and/or subsequently heated are rinsed with protective gas.

5. Process according to one of claims 1 to 4, characterised in that the laser beam (20) is pulsed with an increase in output compensating the loss in intensity caused by the shape of the beam spot deviating from the shape of a round spot.

6. Process according to one of claims 1 to 5, characterised in that the edge (10) of a part to be joined (32) with an edge (11) of a further part to be joined (33) are guided together like a pair of scissors by a vertical moving component while the parts are being moving forward to form a butt join.

7. Process according to claim 6, characterised in that the surfaces (16, 17) forming the join spot (14) of the parts to be joined (32, 33) are formed in an angle running at 90° to the outer surface (35) of a workpiece of these parts to be joined (32, 33).

8. Process according to one of claims 1 to 7, characterised in that for the purpose of joining large surfaces of at least two parts to be joined (39, 40) as a layer material, the laser beam is repeatedly deflected and at the join spot (14) is smaller than the gap height (s).

9. Process according to claim 8, characterised in that at least one part to be joined (32) is used, which has at least two layers (39, 40) of different materials.

10. Process according to one of claims 1 to 9, characterised in that only one or a limited number of layers (39 or 40) of the layered join part (32) are joined to the other part to be joined.

11. Device for using laser radiation and the material themselves to form a join according to claims 1 to 10, which has a laser generator, a laser beam guide lens, a device for forming and focussing a laser beam (20) between two workpieces guided together to form a narrowing gap, a device for linear polarisation of a laser beam and a device for influencing the direction of polarisation of a laser beam, characterised in that a measuring device is provided for continuously monitoring the temperature of the join parts (32, 33) at the join spot (14) or in the region thereof.

12. Device according to claim 11, characterised in that a controller is provided which compares the measured result of a measuring device in relation to a desired value and correspondingly influences one or more operating values of the join device.

13. Device according to claim 11 or claim 12, characterised in that in each case guide elements (36) are provided on both sides of the gap of the parts to be joined (32, 33) in the region of the weld seam (15), the guide elements (36) having such an effect on the join parts (32, 33) next to the weld seam (15) that the join surfaces (16, 17) are guided free from vertical and/or lateral displacement.

14. Device according to claim 13, characterised in that the guide element (36) is a roller, which has an annular groove (37) which is at least the width of the weld seam and/or a ring band (38) which at the most is as strong as the part to be joined.

15. Device according to one of claims 11 to 14, characterised in that the laser radiation is focussed by focal spots lying in the region of the join spot (14).

16. Device according to one of claims 11 to 15, characterised in that a laser beam having a strip-shaped cross section is arranged rotated to the plane (22) of the join gap.

17. Device according to one of claims 11 to 16, characterised in that devices are provided for dressing the edges, which flatten the join surfaces (16, 17) of the parts to be joined (32, 33) with respect to roughness which disperses the radiation.

## Revendications

1. Procédé d'assemblage par rayon laser, dans lequel le rayon laser (20) est dirigé perpendiculairement à une ligne d'assemblage (19), s'étend parallèlement au plan (22) de l'interstice d'assemblage et est formé ou concentre, transversalement à l'interstice d'assemblage (12), en forme de bande parallèle à l'interstice, qui recouvre au moins une partie de la longueur de la ligne d'assemblage (19), caractérisé en ce que l'on utilise un rayonnement laser à polarisation linéaire et parallèle au plan (22) de l'interstice d'assemblage de deux éléments (32, 33) à assembler.

2. Procédé selon la revendication 1, caractérisé en ce que les éléments (32, 33) à assembler sont préchauffés et/ou post-chauffés dans la région de l'emplacement d'assemblage (14), l'effet de chauffage étant réglé de manière identique ou différente des deux côtés du cordon (15), en fonction des conditions de liaison.

3. Procédé selon la revendication 2, caractérisé en ce que l'obtention d'un effet chauffant identique des deux côtés du cordon résulte de ce que la médiatrice (30) à la ligne d'assemblage (19) inclut l'axe optique du rayonnement laser (20), et de ce que le rayon laser (20) est plus grand que la hauteur (s) de l'interstice à l'emplacement d'assemblage (14).

4. Procédé selon la revendication 2 ou 3, caractérisé en ce que les éléments (32, 33) à assembler, préchauffés et/ou post-chauffés, sont balayés par un gaz protecteur.

5. Procédé selon l'une des revendications 1 à 4, caractérise en ce que le rayon laser (20) est pulsé au moyen d'un renforcement de puissance compensant la perte d'intensité apparaissant lorsque la forme de la tache d'incidence du rayonnement s'écarte de la forme d'une tache ronde.

6. Procédé selon l'une des revendications 1 à 5, caractérisé en ce que le bord (10) d'un élément (32) a assembler est rapproché avec cisaillement d'un bord (11) d'un autre élément (33) à assembler, avec une composante de déplacement verticale, pour former un raccord bout à bout, pendant une avance partielle.

7. Procédé selon la revendication 6, caractérisé en ce que les surfaces (16, 17) formant l'emplacement d'assemblage (14) des éléments (32, 33) à assembler sont réalisées avec un angle (34) différant de 90°, par rapport à une face de pièce (35) de ces éléments (32, 33) à assembler.

8. Procédé selon l'une des revendications 1 à 7, caractérisé en ce que le rayon laser destiné à relier sur une grande surface au moins deux éléments (39, 40) à assembler sous forme de matériau feuilleté est dévié de manière répétée et est plus petit que la hauteur (s) de l'interstice à l'emplacement d'assemblage 14.

9. Procédé selon la revendication 8, caractérisé en ce qu'on utilise au moins un élément (32) à assembler qui présente au moins deux couches (39, 40) de matériaux différents.

10. Procédé selon l'une des revendications 1 à 9, caractérisé en ce que seule une, ou un nombre limité des couches (39 ou 40) de l'élément (32) feuilleté à assembler est reliée à l'autre élément à assembler.

11. Dispositif d'assemblage par rayon laser selon les revendications 1 à 10, qui présente un générateur laser, une optique de guidage du rayon laser, un dispositif de mise en forme et de concentration d'un rayon laser (20) entre deux pièces rapprochées de manière à former un interstice (12) se rétrécissant, un dispositif de polarisation linéaire et un dispositif de modification de la direction de polarisation d'un rayon laser, caractérisé en ce qu'il comprend un dispositif de mesure destiné à la surveillance en continu la température des éléments (32, 33) à assembler, à l'emplacement d'assemblage (14) ou au voisinage de celui-ci.

12. Dispositif selon la revendication 11, caractérisé en ce qu'il existe un régulateur comparant le résultat de la mesure du dispositif de mesure avec une valeur de consigne et modifiant en conséquence une ou plusieurs grandeurs de réglage dispositif d'assemblage.

13. Dispositif selon la revendication 11 ou 12, caractérisé en ce qu'au voisinage du cordon de soudure (15), des deux côtés de l'interstice formé par les éléments (32, 33) à assembler, sont prévus des éléments de guidage (36), qui agissent sur les éléments (32, 33) à assembler, a côté du cordon de soudure (15), de telle sorte que les surfaces d'assemblage (16, 17) soient guidées sans décalage en hauteur et/ou en largeur.

14. Dispositif selon la revendication 13, caractérisé en ce que l'élément de guidage (36) est un rouleau qui présente au moins une gorge annulaire (37) dont la largeur vaut au moins celle du cordon de soudure et/ou un épaulement annulaire (38) dont l'épaisseur vaut au moins celle de l'élément à assembler.

15. Dispositif selon l'une des revendications 11 à 14, caractérisé en ce que le rayonnement laser est concentré avec son point focal situé au voisinage de l'emplacement d'assemblage 14.

16. Dispositif selon l'une des revendications 11 à 15, caractérisé en ce qu'un rayon laser de section transversale en forme de bande est disposé suivant une inclinaison par rapport au plan (22) de l'interstice d'assemblage.

17. Dispositif selon l'une des revendications 11 à 16, caractérisé en ce qu'il comprend des moyens de préparation des bords, qui lissent les rugosités dispersant le rayonnement des surfaces d'assemblage (16, 17) des éléments (32, 33) à assembler.
